(19) Europäisches Patentamt
European Patent Office
Office européen des brevets

(11) **EP 3 125 702 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **15744847.3**

(22) Anmeldetag: **01.04.2015**

(51) Int Cl.:
*A24C 5/00* *(2006.01)*    *A24C 5/56* *(2006.01)*
*B26F 1/28* *(2006.01)*

(86) Internationale Anmeldenummer:
**PCT/AT2015/050086**

(87) Internationale Veröffentlichungsnummer:
**WO 2015/149103 (08.10.2015 Gazette 2015/40)**

(54) **DIFFUSIONSOPTIMIERTES MUNDSTÜCKBELAGPAPIER**

DIFFUSION-OPTIMIZED TIPPING PAPER

PAPIER DE REVÊTEMENT D'EMBOUT À DIFFUSION OPTIMISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **03.04.2014 AT 502522014**

(43) Veröffentlichungstag der Anmeldung:
**08.02.2017 Patentblatt 2017/06**

(73) Patentinhaber: **Tannpapier GmbH**
**4050 Traun (AT)**

(72) Erfinder: **LINDNER, Michael**
**A-4224 Wartberg ob der Aist (AT)**

(74) Vertreter: **Burgstaller, Peter**
**Rechtsanwalt**
**Landstrasse 12**
**Arkade**
**4020 Linz (AT)**

(56) Entgegenhaltungen:
**EP-A1- 0 909 606    EP-A2- 0 038 977**
**EP-A2- 0 594 122**

**Beschreibung**

Die Erfindung betrifft ein Regelungsverfahren für die Perforation von Mundstückbelagpapieren zur Erzielung einer maximalen Kohlenmonoxid-Reduktion, sowie ein nach diesem Verfahren hergestelltes Mundstückbelagpapier.

Die Reduktion von CO-Konzentration während des Rauchens einer Zigarette erfolgt einerseits durch die sogenannte Verdünnung des Rauchs, welche durch Luftzufuhr ins Innere der Zigarette durch das Tabakstrangende, Poren im Zigaretten- und Hüllpapier bzw. zusätzlich über durch Perforation geschaffene Löcher erfolgt, andererseits durch Diffusion des Kohlenmonoxids durch die Poren bzw. die durch Perforation geschaffenen Löcher aus dem Inneren der Zigarette nach außen. Die Diffusion des Kohlenmonoxids erfolgt somit durch dieselben Poren und Löcher wie die Luftzufuhr, jedoch in entgegengesetzte Richtung. Die Diffusion des Kohlenmonoxids nach außen kann auch als Gasaustausch verstanden werden, da bei diesem Prozess Gase wie Sauerstoff, Stickstoff, etc. ins Innere der Zigarette diffundieren. Die Verdünnung des Rauchs mittels Luftzufuhr wird oft auch als Ventilation bezeichnet, wobei man, je nachdem durch welchen Teil der Zigarette die Luft in das Innere der Zigarette gelangt, zwischen der Filterventilation und der Tabakstrangventilation unterscheidet.

Wesentlich für das Ausmaß der Verdünnung ist der Zugwiderstand der Zigarette. Dieser bestimmt wie hoch der Volumenstrom an Frischluft ist, welcher beim Rauchen durch die Poren und Löcher der Zigarette gesogen wird. Das Verhältnis zwischen dem Volumenstrom an Frischluft durch die Poren und Löcher der einzelnen Teile der Zigarette und dem Gesamtvolumenstrom durch das Mundende der Zigarette wird als Ventilationsgrad bezeichnet, wobei auch hier wieder zwischen einem Filterventilationsgrad und einem Tabakstrangventilationsgrad differenziert wird.

Bei fertigen Zigaretten ist gewünscht, dass diese eine(n) einheitliche Verdünnung bzw. Zugwiderstand bzw. Ventilationsgrad aufweisen, da der Ventilationsgrad den Geschmack der Zigarette maßgeblich beeinflussen und verändern kann.

Der Ventilationsgrad ergibt sich in Abhängigkeit von der Permeabilität (Durchlässigkeit) des Zigarettenpapiers und des Mundstückbelagpapiers. Daher ist es nötig, bei der Fertigung des Zigarettenpapiers und des Mundstückbelagpapiers deren Permeabilität konstant zu halten.

Um eine konstante Permeabilität unabhängig von den Eigenschaften wie Porosität (Verhältnis von Hohlraumvolumen zu Gesamtvolumen) des verwendeten Basispapiers einstellen zu können, wird das Basispapier für das Mundstückbelagpapier mit einer zusätzlichen, einstellbaren Perforation versehen.

Eine übliche Filterzigarette oder auch eine herkömmliche Zigarettenhülse ("Cigarette Tube") besteht neben dem Tabakstrang und dem Filter aus dem den Tabakstrang einhüllenden Zigarettenpapier, dem hochporösen Filterhüllpapier und dem Mundstückbelagpapier. Ein hochporöses Filterpapier ist für die Verwendung von offline- oder vorperforiertem Mundstückbelagpapier erforderlich. Das Mundstückbelagpapier, oft auch als "Tippingpapier" oder kurz "Tipping" bezeichnet, umhüllt den Filter und das Filterhüllpapier. Es ist jener Teil der Filterzigarette, welcher beim Rauchen der Filterzigarette durch die Lippen der die Zigarette rauchenden Person berührt wird. In der Regel ragt das Tippingpapier in Längsrichtung der Filterzigarette auch geringfügig in den Längsbereich des Tabakstranges, umhüllt dort das Zigarettenpapier und ist mit diesem durch eine Klebung verbunden. Durch das Herstellen dieser Klebung werden in der Zigarettenmaschine Filterteil und Tabakstrangteil mechanisch verbunden. Das Tippingpapier ist zumeist tatsächlich ein Papier, es kann beispielsweise auch ein Film oder eine Folie sein. Im Fall der Ausbildung des Tippingpapieres als Film oder Folie kann es beispielsweise aus Cellulosehydrat bestehen. Üblicherweise weist das Mundstückbelagpapier eine optisch ansprechende Bedruckung auf. Oftmals erinnert diese Bedruckung an Kork.

Am tabakstrangnahen Ende ist das Mundstückbelagpapier üblicherweise zum Teil perforiert ausgeführt, sodass beim Saugen an der Zigarette Luft aus der Umgebung in den Filter gelangt und sich dort mit dem aus dem Tabakstrang kommenden Rauchstrom vermengt, wodurch die Rauchwerte reduziert werden.

Das Mundstückbelagpapier wird in der Regel nach dem Bedrucken perforiert um zu verhindern, dass die Perforationslöcher durch das Bedrucken wieder verschlossen werden.

Da das unter dem Mundstückbelagpapier liegende Filterhüllpapier hochporös ausgeführt ist, wird die Gesamt- oder Restpermeabilität der Zigarette im Bereich des Filters durch die Porosität des Mundstückbelagpapiers beschränkt. Die Porosität des Mundstückbelagpapiers kann über die Lochgröße bzw. die Anzahl der durch die Perforation erzeugten Löcher eingestellt werden.

Somit kann bei Kenntnis der übrigen Zigarettenparameter (Porosität des Zigarettenpapiers, Filterhüllpapiers, Zugwiderstand des Tabakstrangs und des Filters...) und einem vorgegebenen Zielwert für den Ventilationsgrad bzw. die Rauchwerte der Zigarette ein Sollwert für die Permeabilität des Mundstückbelagpapiers vorgegeben werden. Die Zielwerte für den Ventilationsgrad und der Rauchwerte werden üblicherweise vom Zigarettenhersteller vorgegeben, damit anschließend der Sollwert für die Permeabilität vom Mundstückbelagpapierhersteller ermittelt und bei der Fertigung des Mundstückbelagpapiers herangezogen werden kann.

Nach dem Stand der Technik existieren Verfahren, welche dazu dienen, die Permeabilität des Mundstückbelagpapiers durch Perforation auf den vorgegebenen Sollwert zu regeln.

Die EP 0056223 A2 zeigt ein Verfahren zum Regeln einer Elektroperforationseinrichtungen, bei welcher die Permeabilität der Papierbahn über den durchgelassenen und reflektierten Anteil einer elektromagnetischen Welle (z.B. sichtbares Licht), die auf die perforierte Papierbahn gerichtet ist, bestimmt wird. Die Abweichung des Istwerts zum Sollwert der Permeabilität wird zur Regelung der Funkenenergie genutzt.

Die DE 3016622 A1 zeigt ein Verfahren zum Regeln einer Elektroperforationseinrichtungen, bei welcher die Permeabilität der Papierbahn gemessen wird. Der so erhaltene Messwert wird dazu genutzt die Lochgröße oder die Lochanzahl der Perforation über die Frequenz und Dauer der Entladungen und/oder die Bahngeschwindigkeiten zu regeln.

Die DE 2833527 A1 zeigt ein Verfahren zum Regeln einer Elektroperforationseinrichtungen, bei welcher die Permeabilität der Papierbahn gemessen wird. Der so erhalten Messwert wird dazu genutzt die Lochgröße der Perforation über die Frequenz der Entladungen zu regeln. Dies kann geschehen, indem bei ausreichend hoher Frequenz mehrere Entladungen hintereinander durch dasselbe Perforationsloch erfolgen und dass dieses somit mit jeder Entladung etwas erweitert wird. Zur Kühlung der Elektroden ist vorgesehen, dass Druckluft in Richtung deren Enden geblasen wird.

Die DE 2802315 A1 zeigt ein Verfahren zum Steuern einer Elektroperforationseinrichtungen, bei welcher in einer Prüfvorrichtung die Porosität der Papierbahn gemessen wird. Der so erhalten Messwert wird dazu genutzt die Lochgröße der Perforation über die Frequenz der Entladungen zu steuern oder einzelne Elektrodenpaare abzustellen, um so die Anzahl der Perforationslöcher zu steuern. Die EP0594122 A2 zeigt ein Verfahren zur Herstellung eines diffusionsoptimierten Mundstückbelagpapiers von Rauchwaren durch Perforation der Bahn des Mundstückbelagpapiers, im welchen die Permeabilität des perforierten Mundstückbelagpapiers in-line ermittelt wird und im welchen die Permeabilität konstant eingehalten wird. Bei den Perforationseinrichtungen und den Regelungsverfahren nach dem Stand der Technik blieb bislang der Effekt der Perforation auf die Diffusion von Kohlenmonoxid unberücksichtigt. Der Grund dafür mag darin bestehen, dass bislang die Meinung vorherrschte, dass die Perforation keinen Einfluss auf die Diffusion von Kohlenmonoxid hat, oder dass diese nicht über die Perforation beeinflusst werden kann, wenn eine konstante Permeabilität eingestellt werden soll.

Da die Reduktion von Kohlenmonoxid einen wesentlichen gesundheitlichen Aspekt darstellt, war es ein Anliegen der Anmelderin, die Auswirkungen der Perforation auf die Diffusion von Kohlenmonoxid zu erforschen und diffusions-optimiertes Mundstückbelagpapier zu entwickeln.

Die der Erfindung zu Grunde liegende Aufgabe besteht darin, ein verbessertes Verfahren zur Perforation des Mundstückbelagpapiers bereit zu stellen, wobei die Reduktion des Kohlenmonoxids im Rauch bei konstanter Permeabilität des Mundstückbelagpapiers maximiert werden soll.

Für das Lösen der Aufgabe wird vorgeschlagen die Perforation des als durchlaufende Papier- oder Folienbahn vorliegenden Mundstückbelagpapiers in einer geregelten Perforationsvorrichtung vorzunehmen, wobei die Diffusivität und die Permeabilität des perforierten Mundstückbelagpapiers in-line, also direkt auf der Perforationsmaschine, bestimmt werden und die Diffusivität durch Regelung der Perforationsparameter unter konstanter Einhaltung der vorgebbaren Permeabilität maximiert wird.

Eine Möglichkeit besteht darin, die Lochgröße der durch die Perforation erzeugten Löcher des Mundstückbelagpapiers zu messen und die Perforationsparameter so zu regeln, dass sich die Lochgröße für maximale Diffusion von Kohlenmonoxid einstellt. Die Permeabilität des Mundstückbelagpapiers wird konstant gehalten, indem in Abhängigkeit der sich einstellenden Lochgröße die Anzahl der Perforationslöcher eingestellt bzw. geregelt wird. Durch dieses zweistufige Regelungsverfahren wird erreicht, dass die Diffusion von Kohlenmonoxid durch die Perforation maximiert wird und die Permeabilität konstant gehalten wird.

Wie in weiterer Folge auch theoretisch erklärt wird, hat die Anmelderin festgestellt, dass die Diffusion von Kohlenmonoxid maximal ist, wenn der Lochdurchmesser der einzelnen Perforationslöcher minimal ist. Da der Lochdurchmesser aus technischen Gründen nicht beliebig klein ausgeführt werden kann, besteht das erfindungsgemäße Verfahren darin, dass der Lochdurchmesser auf den je nach Anwendungsfall erreichbaren minimalen Lochdurchmesser geregelt wird und die Anzahl der Perforationslöcher an diesen angepasst wird, um die benötigte Permeabilität zu erreichen. Vorteilhaft gegenüber dem Stand der Technik ist, dass eine maximale Reduktion von Kohlenmonoxid bei Einhaltung der Vorgaben für die Permeabilität erreicht wird. Somit wird die Konzentration des unerwünschten Kohlenmonoxids möglichst weit reduziert, ohne den Geschmack und den Zugwiderstand der Zigarette zu beeinflussen.

Am besten lässt sich das erfindungsgemäße Regelungsverfahren durch Einsatz der durch die Anmelderin entwickelten Methode der Plasmaperforation verwirklichen. Durch die Plasmaperforation werden einerseits extrem kleine Lochdurchmesser erst ermöglicht, andererseits erlaubt diese eine sehr spezifische und rasche Regelung der Perforationsparameter.

Die Erfindung wird an Hand von Zeichnungen veranschaulicht:

Fig. 1: Zeigt den theoretischen Zusammenhang des Lochradius r der Perforation und der für die Diffusion zur Verfügung stehenden Fläche A in Abhängigkeit von der Lochanzahl N bei konstanter Permeabilität P.

Fig. 2: zeigt den Aufbau eines beispielhaften Plasmaperforationskopfes in Schnittansicht.

Fig. 3: zeigt den Aufbau eines weiteren, beispielhaften Plasmaperforationskopfes in Schnittansicht.

Fig. 4: zeigt den Aufbau eines weiteren, beispielhaften Plasmaperforationskopfes in Schnittansicht mit einem Laser als Energiequelle.

Fig. 5: Zeigt den schematischen Aufbau einer ersten erfindungsgemäßen Variante der Regelung.

Fig. 6: Zeigt den schematischen Aufbau einer zweiten erfindungsgemäßen Variante der Regelung.

Fig. 7: Zeigt den schematischen Aufbau einer erfindungsgemäßen Perforationseinrichtung mit schematischer Darstellung der Regelung.

Zunächst wird der theoretische physikalische Ansatz erläutert, ohne an die Theorie gebunden sein zu wollen.

Die Reduktion von Kohlenmonoxid erfolgt über Verdünnung des Rauchstroms und durch Diffusion. Die Reduktion von Kohlenmonoxid durch Verdünnung des Rauchstromes ist durch die Permeabilität P der Zigarette bestimmt, somit muss bei einer vorgegebenen, konstanten Permeabilität P die Maximierung der CO-Reduktion über die Maximierung der Diffusion erfolgen.

Bevor die Lösung über einen mathematischen Ansatz gezeigt wird, wird die Möglichkeit zur Maximierung der Diffusivität bei konstanter Permeabilität P über die physikalischen Zusammenhänge beschrieben. Unter Permeabilität wird in dieser Schrift die Durchlässigkeit des Mundstückbelagpapiers aufgrund eines Druckunterschieds verstanden. Der Druckunterschied entsteht durch Ziehen an der Zigarette. Die Permeabilität ist dabei grob gesagt ein Maß dafür, wieviel Frischluft durch die Perforation des Mundstückbelagpapiers ins Innere der Zigarette gezogen wird. Je kleiner die Perforationslöcher bei konstanter Lochdichte bzw. Anzahl sind, umso größer ist der Zugwiederstand den diese verursachen, daher gilt je kleiner die Löcher sind umso geringer ist die Permeabilität. Als Lochdichte wird die Anzahl an Löchern pro Flächeneinheit verstanden.

Unter Diffusivität wird in dieser Schrift die Durchlässigkeit des Mundstückbelagpapiers aufgrund eines Konzentrationsunterschieds verstanden. Dabei ist die Konzentration von Kohlenmonoxid während des Rauchens in der Zigarette höher als in der Umgebungsluft. Die Diffusion von Kohlenmonoxid erfolgt also entgegen der Richtung des Frischluftflusses von innen nach außen. Die Höhe der Diffusion ist neben dem Konzentrationsunterschied von der Fläche A abhängig, welche für die Diffusion zur Verfügung steht.

Dabei haben viele kleine Löcher, welche dieselbe Permeabilität P aufweisen wie wenige große Löcher, in Summe eine größere Fläche A als die wenigen großen Löcher. Daher kann die Diffusion durch Perforation mit möglichst vielen möglichst kleinen Löchern bei konstanter Permeabilität P maximiert werden.

Die Permeabilität P des Mundstückpapiers kann über die Parameter Lochgröße und Lochanzahl der Perforation verändert werden. Die Permeabilität P kann dabei mit der Formel

$$P = \frac{\pi}{8\eta} \frac{nr^4}{d\,\Delta p^{v-1}}$$

näherungsweise bestimmt werden. $\eta$ beschreibt dabei die dynamische Viskosität von Luft. n ist die Anzahl an Löchern. r ist der Lochradius. d ist die Dicke des Papiers. $\Delta p$ ist die Druckdifferenz zwischen der Außenseite und Innenseite des Papiers und v ist ein empirisch bestimmter Permeabilitäts-Exponent, welcher von der Perforationsmethode abhängig ist.

Die Diffusionsrate von Kohlenmonoxid aus der Zigarette ergibt sich näherungsweise als Produkt des Diffusionskoeffizienten von Kohlenmonoxid in Luft und aus der für die Diffusion zur Verfügung stehenden Fläche A. Für diese Betrachtung ist es ausreichend festzuhalten, dass die Diffusionsrate größer wird, je mehr Fläche A für die Diffusion zur Verfügung steht. Diese Fläche A ergibt sich aus der Fläche eines Lochs $r^2\pi$ mal der Anzahl an Löchern n

$$A = nr^2\pi$$

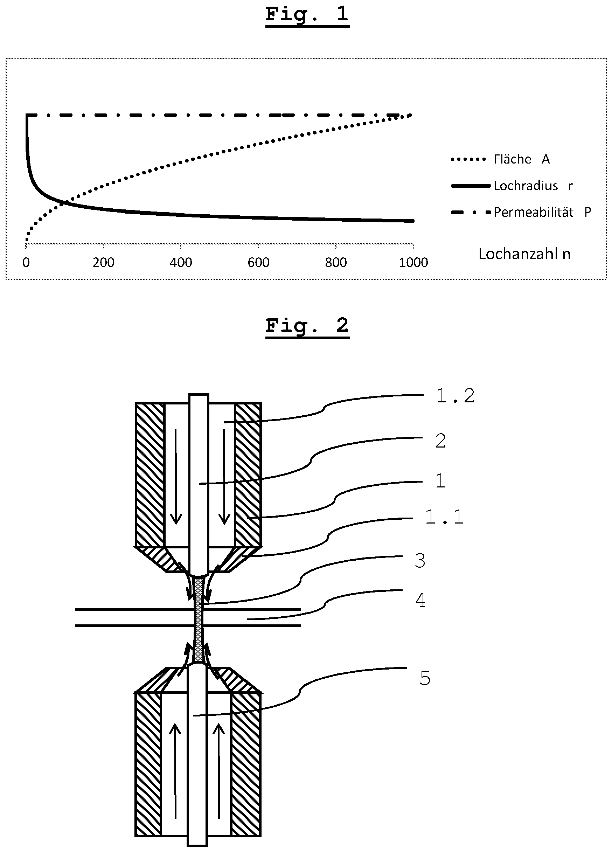

Somit ist bei konstanter Permeabilität P das Verhältnis von Lochanzahl n zu Lochradius r so zu wählen, dass die Summe der Lochflächen maximal wird. In Fig. 1 ist der Zusammenhang von Permeabilität P, Lochradius r, Lochanzahl n und Diffusionsfläche A gezeigt. Bei einem konstanten Wert der Permeabilität P nimmt der Radius r der Löcher mit steigender Lochanzahl n stetig ab. Umgekehrt nimmt die Diffusionsfläche A ($=r^2\pi n$) mit steigender Lochanzahl n und sinkendem Lochradius r zu. Um die Diffusion von Kohlendioxid durch das Mundstückbelagpapier zu maximieren ist es also nötig, die Lochanzahl zu maximieren, bzw. die Lochgröße zu minimieren.

Der begrenzende Faktor in diesem Zusammenhang ist die Lochgröße, da diese abhängig von der Perforationsmethode und dem eingesetzten Mundstückbelagpapiertyp technisch bedingt nicht beliebig klein ausgeführt werden kann. Jedoch ist es möglich die Perforationsparameter so zu regeln, dass sich der minimal erreichbare Lochdurchmesser $D_{min}$ einstellt.

Da dieser minimal erreichbare Lochdurchmesser $D_{min}$ von vielen Parametern abhängt (Papierdicke d, Beschichtung und Art des Papiers, Luftfeuchtigkeit, Luftdruck, Abweichungen der Leistung der Energiequelle...) ist erfindungsgemäß vorgesehen den Lochdurchmesser D mit optischen Mitteln in-line zu messen und die Messwerte zur Regelung der Perforationsparameter (Leistung der Energiequelle, Dauer des Energiepulses, Abstand der Energiequelle zur Papierbahn, Art, Menge und Druck der Gaszuspeisung, Geschwindigkeit der Papierbahn...) zu verwenden.

Die Anzahl der Perforationslöcher wird an den minimal erreichbaren Lochdurchmesser $D_{min}$ angepasst. Dies kann rechnerisch erfolgen oder durch optische Messung der Permeabilität P der perforierten Papierbahn.

Rechnerisch ergibt sich die Lochanzahl n durch

$$n = \frac{8\eta}{\pi} \frac{P_{soll} d \Delta p^{v-1}}{r^4}$$

Die Sollpermeabilität $P_{soll}$ kann indirekt über den Ventilationsgrad bzw. über die Rauchwerte durch den Zigarettenhersteller angegeben sein. $\eta$, $\Delta p$ und $v$ sind konstant, bzw. vom verwendeten Perforationsverfahren abhängig. Die benötigte Lochanzahl n kann daher bei Messung der Papierdicke d und des Lochradius r bzw. des Lochdurchmessers D (D=2r) berechnet werden.

Bevorzugt wird in einem zusätzlichen zweiten Regelkreis die Permeabilität P des perforierten Papiers gemessen und die Lochanzahl n entsprechend geregelt, um die Permeabilität P am Sollwert zu halten.

Die Ausführung mit zwei unabhängigen Regelkreisen ist möglich, wenn die Perforationsparameter zur Regelung der Lochgröße keinen Einfluss auf die Lochanzahl n haben und umgekehrt die Lochanzahl n keinen Einfluss auf den Lochdurchmesser D hat.

Die Lochanzahl n kann beispielsweise bei vielen Perforationsköpfen dadurch eingestellt werden, indem an einzelnen Perforationsköpfen kein Energieimpuls angelegt wird. Bei einem einzelnen Perforationskopf kann die Lochanzahl n geregelt durch die Anzahl bzw. die Frequenz der Energieimpulse eingestellt werden.

In Fig. 2 ist ein Plasmaperforationskopf zur Plasmaperforation einer Papierbahn, insbesondere einer Mundstückbelagpapierbahn oder eines Mundstückbelagpapiers 4 dargestellt. An zumindest einer flächigen Seite des Mundstückbelagpapiers 4 ist eine möglichst kleinflächige Energiequelle angeordnet. In diesem Beispiel wird als Energiequelle eine nadelförmige Elektrode 2 verwendet, genauer gesagt das kurzzeitige Anlegen einer Hochspannung (Wechselspannung oder Gleichspannung) zwischen zwei Elektroden 2, 5. Die Perforation kann unter normaler Atmosphäre erfolgen, oder unter in einer speziellen Gasatmosphäre wie einer Schutzgasatmosphäre oder einer Atmosphäre mit definierbarer Gaszusammensetzung erfolgen. Die Atmosphäre kann dabei Normaldruck aufweisen, oder einen gegenüber dem Umgebungsdruck (Luftdruck) höheren oder niedrigeren Druck.

Bevorzugt kann die Gaszusammensetzung direkt am Ort des Plasmas unabhängig von der Umgebungsatmosphäre verändert werden.

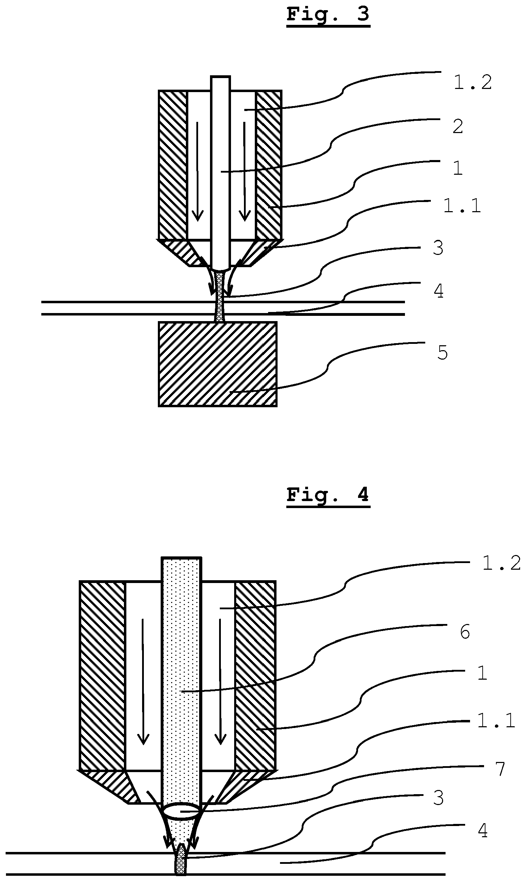

Dazu ist die Elektrode 2 bevorzugt in einem Rohr 1 angebracht. Das Rohr 1 dient zum Transport eines unter Druck stehenden Gases oder Gasgemisches. Zum besseren Verständnis wird der Gasstrom in den Figuren durch Pfeile veranschaulicht. Am vorderen Ende des Rohrs 1 befindet sich eine Düse 1.1. Diese Düse 1.1 ist konzentrisch um die Elektrode 2 im Bereich ihrer dem Mundstückbelagpapier 4 zugewandten Spitze angebracht. Durch den vom Rohr 1 und der Düse 1.1 eingeschlossenen Hohlraum 1.2 wird also ein unter Druck stehendes Gas oder Gasgemisch ringförmig um die Elektrode 2 in Richtung des Mundstückbelagpapiers 4 eingebracht. An der anderen Seite des Tippingpapiers 4 kann sich eine ebenso ausgeführte nadelförmige Gegenelektrode 5 befinden oder wie in Fig. 3 gezeigt eine flächige Gegenelektrode 5.

Indem durch den Hohlraum 1.2 ein inertes Gas oder ein Gasgemisch mit hoher Inertgaskonzentration eingebracht wird, verbleibt in der Mitte dieses Gasstroms, also direkt vor der Spitze der Elektrode 2 zum Mundstückbelagpapier 4 ein schmaler Bereich mit einer anderen Gaszusammensetzung. In diesem Bereich ist die Konzentration von Inertgas etwas geringer als im direkten Strom aus der Düse 1.1. Dadurch ist es leichter möglich in diesem Bereich das Gas zu ionisieren und so ein lokal begrenztes Plasma 3 zu erzeugen, welches schließlich durch Sublimation ein Loch im Mundstückbelagpapier 4 erzeugt. Da schon im und vor allem um das Plasma 3 eine hohe Konzentration an Inertgas vorhanden ist, wird die Oxidation an der Oberfläche des Mundstückbelagpapiers 4 unterbunden, wodurch Brandspuren am Rand des Loches sichtbar vermieden werden. Durch eine enge oder etwas weitere Ausgestaltung der Düse 1.1 oder durch Veränderung des Abstands, mit welchem die Elektrode 2 aus der Düse 1.1 ragt, kann die Ausdehnung des Bereichs mit niedrigerer Inertgaskonzentration und somit des Plasmas 3 vergrößert oder verringert werden.

Bevorzugt ist im erfindungsgemäßen Regelungsverfahren, neben der Frequenz, Dauer und Höhe der Spannungsimpulse zwischen den Elektroden 2, 5 zumindest einer der folgenden Parameter regelbar:

- der Öffnungsdurchmesser der Düse;

- der Abstand zwischen Düse und Elektrodenspitze;

- Elektrodenabstand zur Papierbahn;

- Bahngeschwindigkeit;

- der Gasdruck;

- die Gaszusammensetzung;

- Durchflussmenge des Gases.

Bei der üblichen Anordnung einer Vielzahl von Nadelelektroden 2 kann bevorzugt der Öffnungsdurchmesser der Düse und/oder der Abstand zwischen Düse und Elektrodenspitze geregelt werden, da diese Änderungen unmittelbar am Wirkungsort des Plasmas erfolgen und sich somit sehr zeitnah auf die Perforation auswirken.

Zudem können diese beiden Parameter an jeder Elektrode 2 einzeln, unabhängig von den anderen Elektroden 2 eingestellt werden, wodurch jede einzelne Elektrode 2 auf den für sie minimal erreichbaren Lochdurchmesser $D_{min}$ geregelt werden kann.

Fig. 4 zeigt einen bevorzugten Perforationskopf mit einem Laserstrahl 6 als Energiequelle. Die Perforation kann in normaler Atmosphäre, oder in einer speziellen Gasatmosphäre wie einer Schutzgasatmosphäre oder einer Atmosphäre mit definierbarer Gaszusammensetzung erfolgen. Die Atmosphäre kann dabei Normaldruck aufweisen, oder einen gegenüber dem Umgebungsdruck (Luftdruck) höheren oder niedrigeren Druck.

Bevorzugt kann die Gaszusammensetzung direkt am Ort des Plasmas unabhängig von der Umgebungsatmosphäre verändert werden.

Dazu ist am unteren Ende des Rohres 1 wiederum eine Düse 1.1 angeordnet. In dieser Düse 1.1 befindet sich mittig eine Linse 7, welche zwei Aufgaben erfüllt. Die Linse 7 dient erstens zur Fokussierung des Laserstrahls 6 auf die Oberfläche des Mundstückbelagpapiers 4. Zweitens dient die Linse 7 dazu den Gasstrom aus der Düse 1.1 in gewünschter Weise zu beeinflussen und zwar derart, dass der Gasstrom ringförmig um die Linse 7 erfolgt. Damit das Inertgas oder Gasgemisch rund um die Linse 7 ausströmen kann, ist diese beispielsweise mit dünnen Drähten im Rohr 1 fixiert, oder befindet sich am Ende eines starren Lichtwellenleiters der wie die Elektrode 2 senkrecht im Rohr 1 verläuft. Das Plasma 3 beschränkt sich in diesem Fall auf den Bereich, indem die Energiedichte des Laserstrahls 6 hoch genug ist, um das Gasgemisch mit einer ausreichend geringen Inertgaskonzentration zu ionisieren. Im Brennpunkt der Linse 7 ist die Energiedichte des Laserstrahls 6 am höchsten und auch die Inertgaskonzentration am geringsten, daher kann ein lokales, kleinflächiges Plasma 3 erzeugt werden.

Bevorzugt ist im erfindungsgemäßen Reglungsverfahren, neben der Leistung, Brennweite, Frequenz, Dauer und Geometrie der Laserpulse einer der folgenden Parameter regelbar:

- der Öffnungsdurchmesser der Düse;

- der Abstand zwischen Düse und Linse, bzw. Lichtleiterspitze;

- Bahngeschwindigkeit;

- der Gasdruck;

- die Gaszusammensetzung;

- Durchflussmenge des Gases.

Als Inertgas kann beispielsweise Stickstoff ($N_2$), Argon (Ar), Helium (Ne), Neon (Ne) oder Kohlendioxid ($CO_2$) eingesetzt werden. Es ist auch möglich, einzelne Inertgasarten in bestimmten Mischungsverhältnissen miteinander zu kombinieren bzw. kombiniert durch die Düsen in den Wirkungsraum einströmen zu lassen. Da das Inertgas oder Gasgemisch unter Druck die Düse 1.1 verlässt, ist die Dichte des Gases oder des Gasgemisches im ringförmigen Bereich rund um die Elektrode 2 oder Linse 7 höher als im Bereich genau vor der Elektrode 2 oder Linse 7. Je dichter ein Gas ist, desto mehr Energie wird benötigt, um dieses zu ionisieren. Zusätzlich werden durch den Gasstrom Ionen und Elektronen weggespült. Auch diese beiden Effekte tragen dazu bei, dass das Plasma 3 lokal begrenzt wird.

Die Regelung des Lochdurchmessers D kann bei der Plasmaperforation daher auch erfolgen, wenn als Gasgemisch Druckluft eingesetzt wird.

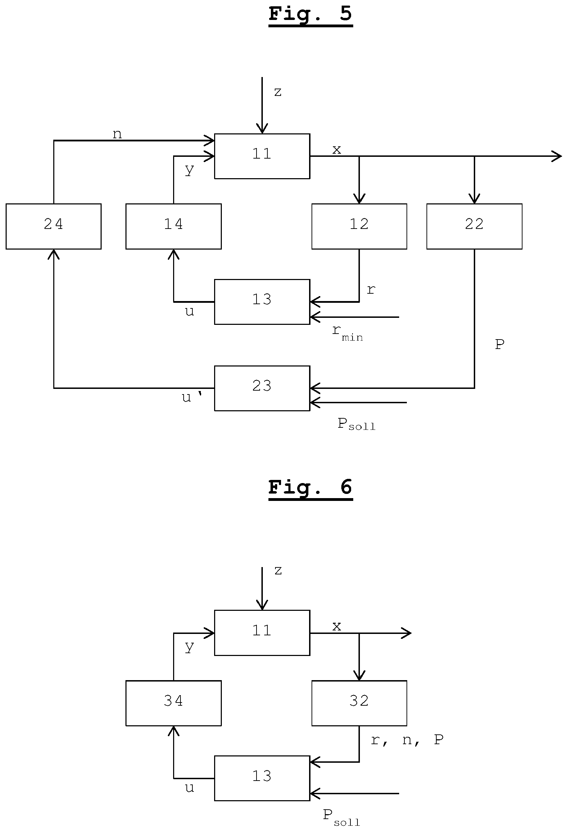

Fig. 5 zeigt schematisch die erste erfindungsgemäße Regelungsvariante. Dabei wird durch den inneren der beiden dargestellten Regelkreise die Lochgröße, bzw. der Lochdurchmesser D und der über diesen berechenbaren Lochradius r, geregelt und durch den äußeren Regelkreis die Lochanzahl n.

Durch die Messvorrichtung 12 wird der Lochradius r beziehungsweise der Lochdurchmesser D gemessen. Der Regler 13 regelt die Steuergröße u des Stellglieds 14, um den Lochradius r bis zum erreichbaren minimalen Lochradius $r_{min}$ zu reduzieren. Der minimal erreichbare Lochradius $r_{min}$ kann beispielsweise in einer Justierungsphase ermittelt werden, indem der Lochradius r durch Veränderung der Perforationsparameter solange reduziert wird, bis das erzeugte Plasma zu schwach ist, um überhaupt ein Loch in das Papier zu perforieren. Der Sollwert in Form des minimal erreichbaren Lochradius $r_{min}$ wird nach erfolgter Justierung etwas über dem kritischen Lochradius, bei unterschreiten dessen die Perforation nicht mehr zuverlässig erfolgt, gesetzt.

Der Regler 13 liefert ein Steuergröße u, die auf die Stelleinrichtung 14 wirkt. Durch die Stelleinrichtung 14 kann die Stellgröße y wie beispielsweise der Gasdruck, die Gaszusammensetzung, der Düsendurchmesser oder der Abstand der Düse zur Spitze der Energiequelle verändert werden. Die Änderung der Stellgröße 14 bewirkt eine Änderung des Plasmas 3 an der Papierbahn 4 (Regelstrecke 11), was eine Veränderung des Lochradius r zur Folge hat.

Die Messvorrichtung 22 misst die Permeabilität P, bevorzugt mittels elektromagnetischer Wellen wie in der EP 0056223 A2 gezeigt. Durch die Differenz des gemessenen Werts und des vorgegebenen Sollwert $P_{soll}$ wird die Anzahl n der Perforationslöcher geregelt. Die Steuergröße u' bewirkt, dass einzelne Perforationsköpfe zu- oder abgeschaltet werden.

Die Messvorrichtung 12 kann beispielsweise eine Zeilenkamera (beispielsweise hochauflösende CMOS oder CCD-Kamera eines optische (Laser-) Mikrometers) sein, die auf die Papierbahn gerichtet und synchronisiert zur Perforationsvorrichtungen Aufnahmen der Perforationsreihe der Papierbahn macht, sodass aus der Aufnahme die Anzahl der Perforationslöcher und deren Lochdurchmesser D einer Perforationsreihe durch Bildanalyse in einer Datenverarbeitungsanlage ermittelbar sind.

Fig. 6 zeigt den Regelkreis einer zweiten Variante der erfindungsgemäßen Regelung. Dabei wird in einer Justierungsphase die Lochgröße durch Veränderung ausgewählter Perforationsparameter zunächst so weit reduziert, bis beispielsweise nur noch 50 bis 80% aller Energiepulse der Energiequelle (Elektroden 2 oder Laserstrahl 6) tatsächlich zu einer Perforation führen, das Verhältnis von Energieimpulsen welche ein Plasma erzeugenden zu Energieimpulsen die zu keiner Plasmaentladung führen wird in Folge als "Entladungsrate" bezeichnet. Danach werden bevorzugt andere Regelparameter dazu genutzt, die Energiedichte in der Weise zu regeln, dass sich aus der resultierenden Entladungsrate die geforderte Permeabilität $P_{soll}$ ergibt.

Beispielsweise kann das Minimieren der Lochgröße in der Justierungsphase dadurch erfolgen, dass bei konstanter Leistung der Energiequelle der Gasdruck oder die Gasflussmenge erhöht, bzw. die Gaszusammensetzung variiert wird, bis eine Entladungsrate von 75% erreicht wird. Danach werden diese Gasparameter konstant gehalten und die Parameter der Energiequelle (z.B. Dauer, Frequenz, Höhe des Energieimpulses) so geregelt, dass durch Erhöhen oder Verringern der Entladungsrate die Permeabilität P den vorgegebenen Sollwert annimmt.

Sollte es dazu kommen, dass bei maximaler Entladungsrate die geforderte Permeabilität $P_{soll}$ dennoch unterschritten wird, so muss die Lochgröße auf Kosten der Diffusivität etwas aufgeweitet werden, beispielsweise durch Verringerung des Gasdruckes, Reduktion des Inertgasanteils des Gasgemisches oder Anpassung der Bahngeschwindigkeit. Zur Realisierung dieser Variante ist eine Messvorrichtung 32 vorhanden, die die Lochanzahl n (bzw. Lochdichte), die Lochgröße (Lochradius r) und die Permeabilität P messtechnisch erfasst. Die Daten der Messvorrichtung werden in einer Datenverarbeitungsanlage analysiert, und durch einen beispielsweise als Software implementierten Regler 13 wird eine (oder mehrere) Stellgröße(n) generiert.

Bevorzugt kann durch die Datenverarbeitungsanlage aus der Lochanzahl n mal der mittleren Lochgröße die Gesamtfläche der Perforation berechnet und gespeichert werden, wobei die Gesamtfläche der Perforation eine Kennzahl (Diffusionsfläche A) für die Diffusivität des Papiers darstellen kann, oder die Diffusivität des Papiers aus dieser berechnet werden kann.

Zusätzlich zu der Lochanzahl n (bzw. Lochdichte), der Lochgröße (Lochradius r) und der Permeabilität P ist es vorteilhaft auch die Dicke d der Bahn zu erfassen.

Bevorzugt kommt ein berührungsloses Verfahren zum kontinuierlichen Messen der Papierdicke d zum Einsatz, solche Verfahren sind nach dem Stand der Technik bekannt und werden beispielsweise in den Schriften US4107606 (A), EP0995076 (A1), US6281679 (B1) gezeigt. Die Messvorrichtung zur Messung der Papierdicke d kann dabei in Bahnrichtung gesehen bevorzugt vor aber auch nach der Perforationsvorrichtung angeordnet sein.

Besonders bei Papiersorten mit stark schwankenden Eigenschaften (Dicke d und Permeabilität P des Basispapiers, oder Dicke d einer Beschichtung) kann es erforderlich sein zusätzlich zur Dickenmessung auch die Permeabilitätsmessung vor der Perforationsvorrichtung vorzunehmen. In diesem Fall kann die benötigte Anzahl von Perforationslöchern für die jeweils folgende Perforation aus den Papierparametern und dem erreichbaren minimalen Lochdurchmesser D näherungsweise berechnet werden und gegebenenfalls über die Messwerte einer nach der Perforationsvorrichtung angeordneten Messvorrichtung, zur Messung der tatsächlich erreichten Permeabilität P, durch Anpassung der Formel geregelt werden. Alternativ kann auch die Entladungsrate in Abhängigkeit der Dicke d und Permeabilität P des Basispapiers geregelt werden.

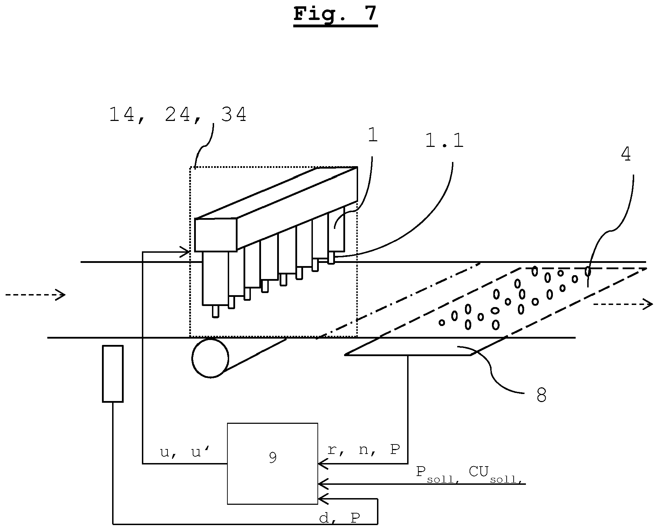

In Fig. 7 ist eine beispielhafte, erfindungsgemäße Plasmaperforationsvorrichtung mit einer Schiene mit acht Perforationsköpfen und einer Messvorrichtung 8 gezeigt. Die Anzahl von acht Perforationsköpfen ergibt sich hier aus Gründen der Anschaulichkeit, bei einer praktischen Umsetzung kann die Anzahl der Perforationsköpfe beispielsweise zwischen 15 und 30 pro Schiene betragen, wobei mehrere Schienen parallel zueinander - entweder hintereinander und / oder nebeneinander - angeordnet sein können. Die Papierbahn 4 wird kontinuierlich von links nach rechts durch die Vorrichtung bewegt, eventuell mit veränderlicher Geschwindigkeit. Es ist auch möglich gleichzeitig zwei oder mehr zu perforierende Papierbahnen, welche aneinander anliegen und so mehrere Lagen bilden durch die Perforationsvorrichtung zu führen.

Besonders bevorzugt sind die Messvorrichtungen 12, 22 als eine Messvorrichtung 8 ausgebildet, deren Signal in einer Datenverarbeitungsanlage 9 analysiert wird. Die Datenverarbeitungsanlage ermittelt den Radius r, die Lochanzahl n und die Permeabilität P und generiert durch als Software implementierte Regler 13, 23 die Steuergrößen u, u'. Bevorzugt wird der Lochradius r bzw. der Lochdurchmesser D für jeden Perforationskopf erfasst, um gezielt Parameter an einzelnen Perforationsköpfen verändern zu können, oder um reagieren zu können, falls einzeln Perforationsköpfe beispielsweise durch Verschleiß deutlich größere Perforationslöcher erzeugen als andere.

In die Datenverarbeitungsanlage kann anstelle der Sollpermeabilität $P_{soll}$ (in Coresta Units CU) auch der zu erreichende Ventilationsgrad, Zugwiderstand und/oder die zu erreichenden Rauchwerte eingegeben werden. Durch eine in der Datenverarbeitungsanlage hinterlegte Rechenvorschrift kann aus diesen Vorgaben wiederum die Sollpermeabilität $P_{soll}$ berechnet werden.

Als Eingangsgrößen der Datenverarbeitungsanlage dienen der Lochradius r bzw. der Lochdurchmesser D, die Lochanzahl n bzw. Lochdichte und die Permeabilität P. Zusätzliche Eingangsgrößen sind die Papierdicke d, die Permeabilität P des Basispapiers, Art und Dicke einer allfälligen Beschichtung und die Bahngeschwindigkeit. Sind die Dicke d und Permeabilität P des Basispapiers, bzw. die Beschichtung über die gesamte Papierbahn konstant, so ist es ausreichend diese Werte vor Beginn der Perforation in die Datenverarbeitungsanlage einzugeben. Vor allem wenn die Permeabilität P des Basispapiers oder des beschichteten Papiers im Vergleich zur durch die Perforation erzielten Permeabilität P vernachlässigbar gering ist, kann auf die Berücksichtigung der Permeabilität P des Basispapiers verzichtet werden. Der Lochradius r und die Lochanzahl n werden nach der Perforationsvorrichtung durch die Messvorrichtung 8 messtechnisch erfasst, wobei durch die Messvorrichtung 8 bevorzugt auch die Permeabilität P erfasst wird, oder die Datenverarbeitungsanlage aus der Lochanzahl n, dem Lochradius r und der Dicke d der Papierbahn die Permeabilität P gemäß dieser Formel (oder anderer Formeln) berechnen kann:

$$P = \frac{\pi}{8\eta} \frac{nr^4}{d \Delta p^{v-1}}$$

Die Bahngeschwindigkeit dient als Eingangsgröße der Datenverarbeitungsanlage und kann auch als Ausgangsgröße (Stellgröße) dienen, falls die Bahngeschwindigkeit in Abhängigkeit der Eingangsgrößen geregelt werden soll. Weitere Ausgangsgrößen (Stellgrößen) können sein: die Frequenz, Dauer und Höhe der Spannungsimpulse zwischen den Elektroden 2, 5; Elektrodenabstand zur Papierbahn; der Abstand zwischen Düse und Elektrodenspitze; die Leistung, Brennweite, Frequenz, Dauer und Geometrie der Laserpulse; der Abstand zwischen Düse und Linse, bzw. Lichtleiterspitze; der Gasdruck; der Öffnungsdurchmesser der Düse; die Gaszusammensetzung; Durchflussmenge des Gases.

Die gegenständliche Erfindung ist gegenüber dem Stand der Technik vorteilhaft, da der Einfluss der Perforation auf die Reduktion von Kohlenmonoxid durch Diffusion berücksichtigt ist, sodass erstmals eine diffusionsoptimierte Perforation von Mundstückbelagpapier durchgeführt und somit erstmals ein diffusionsoptimiertes perforiertes Mundstückbelagpapier hergestellt wird.

Zudem ist das Verfahren der Plasmaperforation in diesem Zusammenhang besonders vorteilhaft, da neben den klassischen regelbaren Parametern einer Perforationsvorrichtung (Leistung, Dauer, Frequenz der Energieimpulse der Energiequelle und Bahngeschwindigkeit) weitere regelbare Parameter (Gasdruck, Gasmenge, Gaszusammensetzung, Düsengeometrie) durch die gezielte Einspeisung von Gas oder Gasgemischen zur Verfügung stehen, welche es erlauben, die Lochgröße gezielt zu reduzieren und durch die Plasmaperforation zusätzlich ermöglichte Erhöhung der Positionsgenauigkeit der Löcher auch eine größere Lochdichte erzielt werden kann.

**Patentansprüche**

1. Verfahren zur Herstellung eines diffusionsoptimierten Mundstückbelagpapiers (4) von Rauchwaren, insbesondere Filterzigaretten, durch Perforation der Bahn des Mundstückbelagpapiers (4) zum Zweck der maximalen Reduktion von Kohlenmonoxid, **dadurch gekennzeichnet, dass** die Diffusivität und die Permeabilität P des perforierten Mundstückbelagpapiers (4) in-line ermittelt werden und die Diffusivität durch Regelung der Perforationsparameter unter konstanter Einhaltung der vorgebbaren Sollpermeabilität $P_{soll}$ maximiert wird.

2. Verfahren nach Anspruch 1, **dadurch gekennzeichnet, dass** die Sollpermeabilität $P_{soll}$ über Vorgabe des Ventilationsgrads, Zugwiderstands und / oder der zu erreichenden Rauchwerte vorgegeben wird.

3. Verfahren nach einem der Ansprüche 1 und 2, **dadurch gekennzeichnet, dass** die Diffusivität näherungsweise bestimmt wird, indem die Anzahl der Perforationslöcher bzw. die Lochdichte und/oder der Lochdurchmesser D messtechnisch erfasst werden.

4. Verfahren nach einem der Ansprüche 1 bis 3, **dadurch gekennzeichnet, dass** die Papierdicke d in-line gemessen wird.

5. Verfahren nach einem der Ansprüche 1 bis 4, **dadurch gekennzeichnet, dass** die Perforationsparameter so geregelt werden, dass sich der minimal erreichbare Lochdurchmesser $D_{min}$ einstellt und die Permeabilität P über Regelung der Lochanzahl n konstant gehalten wird.

6. Verfahren nach Anspruch 5, **dadurch gekennzeichnet, dass** der minimal erreichbare Lochdurchmesser $D_{min}$ für das verwendete Mundstückbelagpapier (4) in einer Justierungsphase durch automatische oder manuelle Variation der Perforationsparameter ermittelt wird.

7. Verfahren nach einem der Ansprüche 1 bis 6, **dadurch gekennzeichnet, dass** der Lochdurchmesser D messtechnisch erfasst wird und die benötigte Lochanzahl n rechnerisch, bevorzugt über die Formel,

$$n = \frac{8\eta}{\pi} \frac{P_{soll}\, d\, \Delta p^{v-1}}{r^4}$$

ermittelt wird.

8. Verfahren nach einem der Ansprüche 1 bis 3, **dadurch gekennzeichnet, dass** die Perforation durch Plasmaperforation erfolgt und die Lochgröße minimiert wird, indem die Energiedichte des Plasmas so weit herabgesetzt wird bis nur noch vorzugsweise ca. 50% bis 80% der Energieimpulse der zumindest einen Energiequelle zu einer Perforation führen und die Perforationsparameter folgend so geregelt werden, dass sich, aufgrund der Veränderung der Energiedichte des Plasmas, die Anzahl von Perforationslöchern bzw. die Lochdichte einstellt, bei welcher der Istwert der Permeabilität P gleich der Sollpermeabilität $P_{soll}$ ist.

9. Verfahren nach Anspruch 8, **dadurch gekennzeichnet, dass** die Regelung der Lochgröße durch eine oder mehrere der folgenden Maßnahmen erreicht wird: Änderung des Gasdrucks; Änderung der Gasflussmenge; Änderung der Gaszusammensetzung, insbesondere Änderung der Inertgaskonzentration; Änderung der Öffnungsfläche der Düse; Änderung des Abstands, mit welchem die Spitze der Energiequelle aus der Düse ragt, Änderung der Bahngeschwindigkeit.

10. Verfahren nach einem der Ansprüche 8 und 9, **dadurch gekennzeichnet, dass** die Regelung der Anzahl der Energieimpulse der zumindest einen Energiequelle, welche zu einer Perforation führen, dadurch erfolgt, dass die Frequenz, Dauer und/oder Höhe der Spannungsimpulse an den Elektroden (2) verändert werden, oder dass die Leistung, Brennweite, Frequenz, Dauer und/oder Geometrie der Lichtimpulse eines oder mehrerer Laserstrahlen (6) verändert werden.

11. Verfahren nach einem der Ansprüche 1 bis 10, **dadurch gekennzeichnet, dass** die Perforation simultan durch mehreren Perforationsköpfe erfolgt, wobei der Lochdurchmesser D jedes erzeugten Loches ermittelt wird, wobei in einer Datenverarbeitungsanlage jedem Perforationskopf der Durchmesser des durch ihn erzeugten Lochs zugeordnet wird.

12. Verfahren nach einem der Ansprüche 1 bis 11, **dadurch gekennzeichnet, dass** die Perforationsparameter einer Perforationsvorrichtung geregelt werden, indem in Bahnrichtung gesehen nach der Perforationsvorrichtung eine Messvorrichtung angeordnet ist, welche die Größe und Anzahl bzw. Dichte der Perforationslöcher und die Permeabilität P des Mundstückbelagpapiers (4) erfasst, wobei eine Datenverarbeitungsanlage die Daten der Messvorrichtung in zumindest eine Steuergröße zur Regelung der Perforationsparameter umrechnet.

13. Verfahren nach einem der Ansprüche 1 bis 12, **dadurch gekennzeichnet, dass** das Mundstückbelagpapier bei der Perforation von einer Gasatmosphäre umgeben ist, die gegenüber der Umgebungsatmosphäre einen höheren oder niedrigeren Inertgasanteil und/oder einen niedrigeren oder höheren Druck aufweist.

14. Verfahren nach einem der Ansprüche 1 bis 13, **dadurch gekennzeichnet, dass** bei der Perforation des Mundstückbelagpapiers ein unter Druck stehendes Gas oder Gasgemisch konzentrisch um die Energiequellen der Perforationsvorrichtung eingebracht wird, indem jede Energiequelle in einem Rohr (1) angebracht ist, an dessen dem Mundstückbelagpapier (4) zugewandten Ende eine Düse (1.1) angeordnet ist, die als Austrittsöffnung für das unter Druck stehende Gas oder Gasgemisch dient, wobei die Spitze der Energiequelle, von welcher ein Energieimpuls zur Perforation abgegeben wird, konzentrisch in der Düse (1.1) angeordnet ist.

15. Verfahren nach Anspruch 14, **dadurch gekennzeichnet, dass** Energiequellen in Form von Elektroden (2) oder Laser verwendet werden.

**Claims**

1. A method for producing a diffusion-optimised mouthpiece lining paper (4) of smoking goods, in particular filter cigarettes, by perforating the web of the mouthpiece lining paper (4) for the purpose of maximum reduction of carbon monoxide,
**characterised in that**
the diffusivity and permeability P of the perforated mouthpiece lining paper (4) are determined in-line and the diffusivity is maximized by controlling the perforation parameters while maintaining the predetermined target permeability $P_{target}$.

2. A method according to claim 1, **characterised in that** the target permeability $P_{target}$ is predetermined by specifying the degree of ventilation, draft resistance and/or the smoke values to be achieved.

3. A method according to one of claims 1 and 2, **characterized in that** the diffusivity is determined approximately by recording metrologically the number of perforation holes or the hole density and/or the hole diameter D.

4. A method according to one of claims 1 to 3, **characterised in that** the paper thickness d is measured in-line.

5. A method according to one of claims 1 to 4, **characterised in that** the perforation parameters are controlled such that the minimum achievable hole diameter $D_{min}$ is set and the permeability P is kept constant by regulating the number of holes n.

6. A method according to claim 5, **characterised in that** the minimum achievable hole diameter $D_{min}$ for the mouthpiece lining paper (4) used is determined in an adjustment phase by automatic or manual variation of the perforation parameters.

7. A method according to one of claims 1 to 6, **characterised in that** the hole diameter D is metrologically recorded and the required number of holes n is determined mathematically, preferably by means of the formula

$$ n = \frac{8\eta}{\pi} \frac{P_{target} d \Delta p^{v-1}}{r^4} $$

8. A method according to one of claims 1 to 3, **characterised in that** the perforation is carried out by plasma perforation and the hole size is minimized by reducing the energy density of the plasma until preferably only approximately 50 % to 80 % of the energy pulses of the at least one energy source lead to perforation and the perforation parameters are subsequently controlled such that, due to the change in the energy density of the plasma, the number of perforation holes or the hole density is set such that the actual value of the permeability P equals the target permeability $P_{target}$.

9. A method according to claim 8, **characterised in that** control of the hole size is achieved by one or more of the following measures: change in gas pressure; change in gas flow rate; change in gas composition, in particular change in inert gas concentration; change in the opening area of the nozzle; change in the distance at which the tip of the energy source protrudes from the nozzle; change in the web velocity.

10. A method according to one of claims 8 and 9, **characterised in that** the number of energy pulses of the at least one energy source which lead to a perforation is controlled by changing the frequency, duration and/or height of the voltage pulses at the electrodes (2) or by changing the power, focal length, frequency, duration and/or geometry of the light pulses of one or more laser beams (6).

11. A method according to one of claims 1 to 10, **characterised in that** the perforation takes place simultaneously through several perforation heads, wherein the hole diameter D of each hole produced is determined, wherein the diameter of the hole produced by the perforation head is assigned to each perforation head in a data processing system.

12. A method according to one of claims 1 to 11, **characterised in that** the perforation parameters of a perforation device are controlled by a measuring device arranged after the perforation device, as viewed in the web direction, which determines the size and number or density of the perforation holes and the permeability P of the mouthpiece lining paper (4), wherein a data processing system converts the data of the measuring device into at least one control variable for controlling the perforation parameters.

13. A method according to one of claims 1 to 12, **characterised in that** the mouthpiece lining paper is surrounded by a gas atmosphere during perforation which has a higher or lower inert gas content and/or a lower or higher pressure than the ambient atmosphere.

14. A method according to one of claims 1 to 13, **characterised in that** during perforation of the mouthpiece lining paper a pressurized gas or gas mixture is introduced concentrically around the energy sources of the perforation device by having each energy source mounted in a tube (1), wherein, at the end facing the mouthpiece lining paper (4), a nozzle (1.1) is arranged which serves as an outlet opening for the pressurized gas or gas mixture, wherein the tip of the energy source from which an energy pulse for perforation is emitted is arranged concentrically in the nozzle (1.1).

15. A method according to claim 14, **characterised in that** energy sources in the form of electrodes (2) or lasers are used.

**Revendications**

1. Procédé de production d'un papier de revêtement d'embout (4) à diffusion optimisée d'articles à fumer, en particulier de cigarettes à filtre, par perforation de la bande du papier de revêtement d'embout (4) afin de réduire au maximum le monoxyde de carbone, **caractérisé en ce que** la diffusivité et la perméabilité P du papier de revêtement d'embout (4) perforé sont mesurées en ligne et **en ce que** la diffusivité est augmentée au maximum par réglage des paramètres de perforation, tandis que la perméabilité théorique $P_{théorique}$ pouvant être prédéfinie est maintenue constante.

2. Procédé selon la revendication 1, **caractérisé en ce**

**que** la perméabilité théorique P$_{théorique}$ est prédéfinie par le degré de ventilation, la résistance à la traction et/ou les valeurs de fumées à atteindre.

3. Procédé selon l'une des revendications 1 ou 2, **caractérisé en ce que** la diffusivité est déterminée approximativement en comptabilisant par technique de mesure le nombre de trous de perforation ou la densité de trous et/ou le diamètre des trous D.

4. Procédé selon l'une des revendications 1 à 3, **caractérisé en ce que** l'épaisseur de papier d est mesurée en ligne.

5. Procédé selon l'une des revendications 1 à 4, **caractérisé en ce que** les paramètres de perforation sont réglés de façon à régler le diamètre de trou au minimum D$_{min}$ et à maintenir la perméabilité P constante par réglage du nombre de trous n.

6. Procédé selon la revendication 5, **caractérisé en ce que** le diamètre de trou minimum D$_{min}$ pour le papier de revêtement d'embout (4) utilisé est déterminé dans une phase de réglage par variation automatique ou manuelle des paramètres de perforation.

7. Procédé selon l'une des revendications 1 à 6, **caractérisé en ce que** le diamètre de trou D est déterminé par mesure et **en ce que** le nombre de trous n est déterminé par calcul, de préférence par la formule

$$n = \frac{8\eta}{\pi} \frac{P_{théorique} d \Delta p^{v-1}}{r^4}$$

8. Procédé selon l'une des revendications 1 à 3, **caractérisé en ce que** la perforation se fait par perforation plasma et **en ce que** la taille des trous est réduite au minimum en abaissant la densité énergétique du plasma jusqu'à ce que de préférence environ 50 % jusqu'à 80 % de l'impulsion d'énergie d'au moins une source d'énergie entraînent une perforation, et **en ce que** les paramètres de perforation sont réglés de sorte que, en raison de la modification de la densité énergétique du plasma, on règle le nombre de trous de perforation ou la densité de trous, à laquelle la valeur réelle de la perméabilité P est identique à la perméabilité théorique P$_{théorique}$.

9. Procédé selon la revendication 8, **caractérisé en ce que** le réglage de la taille des trous est obtenu par une ou plusieurs des mesures suivantes : Modification de la pression de gaz ; modification du débit de flux de gaz ; modification de la composition du gaz, en particulier modification de la concentration de gaz inerte ; modification de la surface d'ouverture de la buse ; modification de la distance à laquelle la pointe de la source d'énergie dépasse de la buse, modification de la vitesse.

10. Procédé selon l'une des revendications 8 et 9, **caractérisé en ce que** le réglage du nombre d'impulsions d'énergie d'au moins une source d'énergie, lesquelles impulsions entraînent une perforation, se fait en modifiant la fréquence, la durée et/ou la hauteur de l'impulsion de tension au niveau des électrodes (2), ou en modifiant la puissance, la distance focale, la fréquence, la durée et/ou la géométrie de l'impulsion lumineuse d'un ou de plusieurs faisceaux laser (6).

11. Procédé selon l'une des revendications 1 à 10, **caractérisé en ce que** la perforation se fait simultanément par plusieurs têtes de perforation, le diamètre D de chaque trou produit étant déterminé, chaque tête de perforation se voyant attribuer, dans une installation de traitement de données, le diamètre du trou qu'elle doit faire.

12. Procédé selon l'une des revendications 1 à 11, **caractérisé en ce que** les paramètres de perforation d'un dispositif de perforation sont réglés par l'agencement d'un dispositif de mesure après le dispositif de perforation (vu dans le sens de transport), lequel dispositif de mesure enregistre la taille, le nombre et la densité des trous de perforation ainsi que la perméabilité P du papier de revêtement d'embout (4), une unité de traitement de données convertissant les données du dispositif de mesure en au moins une grandeur de commande pour régler les paramètres de perforation.

13. Procédé selon l'une des revendications 1 à 12, **caractérisé en ce que** le papier de revêtement d'embout, lors de la perforation, est entouré d'une atmosphère gazeuse qui présente, par rapport à l'atmosphère environnante, une part de gaz inerte supérieure ou inférieure et/ou une pression inférieure ou supérieure.

14. Procédé selon l'une des revendications 1 à 13, **caractérisé en ce que**, lors de la perforation du papier de revêtement d'embout, on applique un gaz ou un mélange gazeux sous pression de façon concentrique autour des sources d'énergie du dispositif de perforation en installant chaque source d'énergie dans un tube (1), à l'extrémité de laquelle (extrémité orientée vers le papier de revêtement d'embout (4)) on installe une buse (1.1) qui sert de buse de sortie pour le gaz ou le mélange gazeux sous pression, la pointe de la source d'énergie à partir de laquelle sort une impulsion d'énergie pour la perforation, étant agencée de façon concentrique dans la buse (1.1).

15. Procédé selon la revendication 14, **caractérisé en**

ce qu'on utilise les sources d'énergie sous forme d'électrodes (2) ou de laser.

## Fig. 1

Fläche  A
Lochradius  r
Permeabilität  P

Lochanzahl n

## Fig. 2

Fig. 3

Fig. 4

**Fig. 5**

**Fig. 6**

## Fig. 7

14, 24, 34

1

1.1

4

8

9

u, u'

r, n, P

$P_{soll}, CU_{soll,}$

d, P

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0056223 A2
- DE 3016622 A1
- DE 2833527 A1
- DE 2802315 A1
- EP 0594122 A2
- US 4107606 A
- EP 0995076 A1
- US 6281679 B1